Europäisches Patentamt

(19) European Patent Office  (11) Publication number: **0 154 560**

Office européen des brevets  **B1**

(12) # EUROPEAN PATENT SPECIFICATION

(45) Date of publication of the patent specification: (51) Int. Cl.⁴: **A 01 G 1/06**
25.11.87

(21) Application number: **85301591.5**

(22) Date of filling: **07.03.85**

---

(54) **Grafting knife.**

---

(30) Priority: **08.03.84 GB 8406041**

(43) Date of publication of application:
**11.09.85 Bulletin 85/37**

(45) Publication of the grant of the patent:
**25.11.87 Bulletin 87/48**

(84) Designated Contracting States:
**AT BE CH DE FR IT LI LU NL SE**

(56) References cited:
**BE-A-503 572**
**DE-C-409 811**
**FR-A-320 662**
**FR-A-1 555 603**

(73) Proprietor: **Lam, Kam Yau, C-17 Kuan Woh Yuen,
Ipoh Perak West Malaysia (MY)**
Proprietor: **Lam, Kam Kheong, C-17 Kuan Woh
Yuen, Ipoh Perak West Malaysia (MY)**
Proprietor: **Lam, Kam Hoong, C-17 Kuan Woh
Yuen, Ipoh Perak West Malaysia (MY)**

(72) Inventor: **Lam, Kam Yau, C-17 Kuan Woh Yuen,
Ipoh Perak West Malaysia (MY)**
Inventor: **Lam, Kam Kheong, C-17 Kuan Woh
Yuen, Ipoh Perak West Malaysia (MY)**
Inventor: **Lam, Kam Hoong, C-17 Kuan Woh Yuen,
Ipoh Perak West Malaysia (MY)**

(74) Representative: **Molyneaux, Martyn William,
LANGNER PARRY 52- 54 High Holborn, London
WC1V 6RR (GB)**

EP 0 154 560 B1

## Description

This invention relates to a grafting knife for trees and shrubs. A grafting knife is known from DE-C-157072 to have a V-shaped cutting blade with planar wings but such a knife is somewhat complex and is unable to provide a cut of even depth over an undulating surface. The present invention seeks to mitigate this problem.

According to this invention there is provided a grafting knife having an elongate handle and a generally V-shaped cutting blade attached thereto, said blade having planar wings on each side of the cutting edge characterised in that a head is arranged to pivotally support the blade at a location offset from the longitudinal axis of the handle, the cutting edge of the blade faces in the direction of the handle longitudinal axis and the planar wings on each side of the cutting edge define the maximum depth of a groove that may be cut by the blade, so that as the head is drawn along by the handle said wings facilitate an evenly cut groove.

Preferably the blade is shaped so that the converging ends of the limbs of the V-shaped cutting edge are interconnected by an arcuate portion.

Advantageously the blade is shaped so that the diverging ends of the limbs of the V-shaped cutting edge are each connected to a respective wing by a link member having a length partially determining the maximum depth of said groove.

Preferably the head has an inverted U-shape so that the head is attached to the handle by the base of the U-shape, and conveniently the opposed limbs of the U-shape are both cranked along the length thereof away from and substantially parallel with the handle longitudinal axis to form a cranked portion overlying a respective wing, the internal spacing between the opposed limbs of the U-shape being arranged to accommodate the link members therebetween.

Advantageously the blade is secured to the head by a pivot attachment between each link and the cranked portion of the opposed limbs of the U-shape of the head, and conveniently the pivot attachment is provided by a pin extending through each link and the crank portion of the opposed limb of the U-shape of the head.

Preferably each wing extends both transversely away from the link member associated therewith and in a direction toward said handle.

Advantageosly the operative leading edge of each wing is moved toward the handle and away from the arcuate portion of the cutting edge for assisting motion of the wings on a stem to be cut.

Advantageously the cranked portion overlying and adjacent a respective wing is arcuate to facilitate pivotal movement of the blade.

Preferably the blade is elastically flexible.

The invention will now be described with reference to the accompanying drawings in which:

Figure 1 shows a perspective view of a grafting knife in accordance with this invention,

Figure 2 shows a perspective view of the blade holder shown in Figure 1,

Figure 3 shows a perspective view of the blade shown in Figure 1, and,

Figure 4 shows a side view of the grafting knife in operation.

In the figures like reference numerals denote like parts.

The grafting knife shown in the figures has a blade holder 1 formed by an elongate handle 2, with a depending head 3 connected to one end of the handle 2 by an angle piece 4. The head 3 pivotally supports a blade 5 at a location offset from the longitudinal axis of the handle 2.

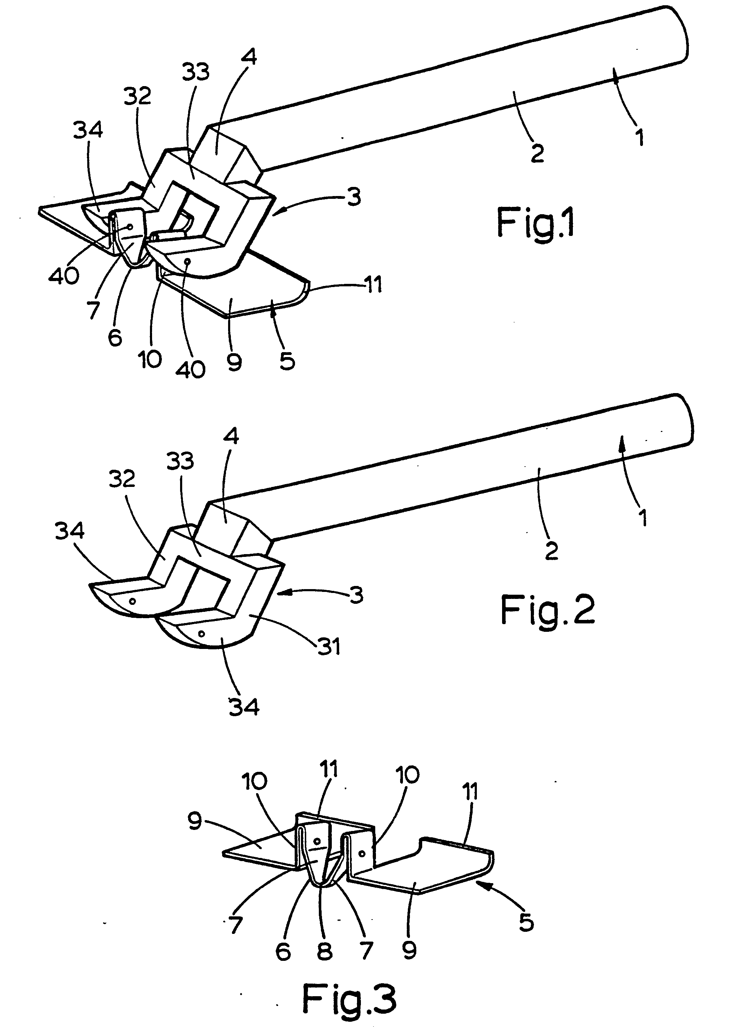

Referring particularly to Figure 3, the blade has a generally V-shaped cutting portion 6 in which the converging ends of limbs 7 are interconnected by an arcuate portion 8. The upper, diverging ends of the limbs 7 are formed to be approximately parallel with one another and the upper ends (as viewed in Figures 1 and 3) of the limbs 7 are each connected to a respective planar wing 9 by a link member 10 which extends downwardly toward the cutting edge so that the combination of the V-shaped cutting edge and the link members 10 forms an inverted W-shape. Each wing 9 extends both transversely away from its associated link member 10 and rearwardly in a direction toward the handle 2 and an operative leading edge 11 of eacn wing is curved upwardly toward the handle 2 for assisting motion of the wings over a stem to be cut.

The blade holder shown particularly in Figure 2 has the head 3 formed by an inverted U-shape and the opposed limbs 31, 32 of the U-shape are interconnected by a base 33 which is connected to the angle member 4. The limbs 31, 32 are both cranked at a distance along the lengths thereof away from and substantially parallel with the handle axis to each form a cranked portion 34 arranged to overlie a respective wing 9. The internal spacing between the limbs 31, 32 is arranged to accommodate the link members 10 of the blade. The blade is pivotally attached to the head by a pin 40 extending through each cranked portion 34 and the adjacent link member 10 and upper, vertical part of the cutting edge 6. So as to facilitate pivotal motion of the blade on the head so the underside of each cranked portion 34 is arcuately shaped.

The pins 40 extend transversely to the longitudinal axis of the handle 2.

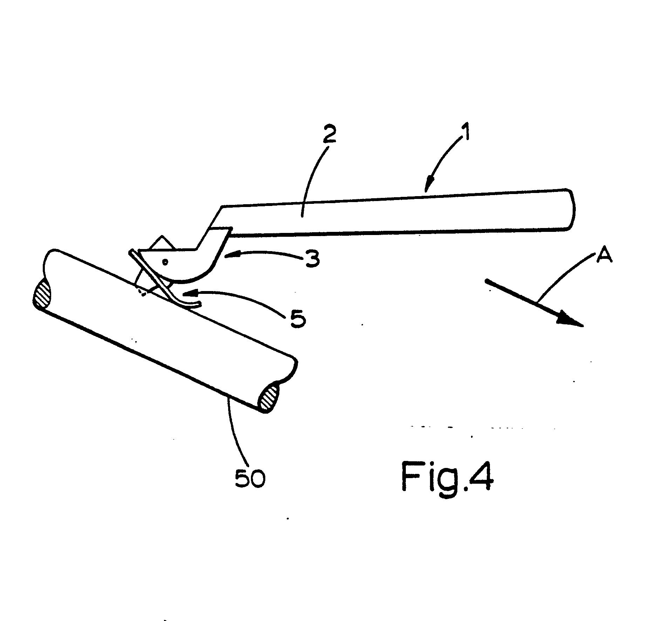

In operation, as shown in Figure 4, the grafting knife is drawn in the direction of arrow-headed line A along a stem 50 to be cut and by exerting a force on the handle in the direction of the blade 5 so the cutting edge 6 forms a groove in the stem a maximum depth determined by the distance between the lowermost part of the cutting edge 6 and the underside of the wings 9, the wings 9 facilitating an evenly cut groove. In the view shown in Figure 4 a light pressure is being exerted upon the handle 2 so that the blade is rotated in a clockwise fashion and the stem 50 is contacted by the curved part of each wing 9 and the cutting portion 6. Thus a shallow groove will be formed in the stem 50. If a greater pressure is applied to the handle 2 then the blade will rotate anti-cloc-kwise with respect to the view shown in Figure 4 and the flat under surface of the planar wings 9 will contact the stem 50 and a deeper groove will be cut.

It will thus be seen that the present invention provides a grafting knife in which a cut can be made in an undulating surface without affecting the depth of groove so that the groove is evenly cut and by providing a knife with a pivotal blade so the depth of cut may be adjusted up to a maximum in dependence upon the depth of the cutting portion 6 below the planar wing 9.

The blade may be formed of elastically flexible sheet material or forged in any convenient fashion. Although the pivotal attachment between the blade and the head is a pin in the preferred embodiment, the attachment may alternatively be formed by a protrusion in the outer surface of each link member 10 and a corresponding detent in the internal surface of the cranked portions 34, or vice versa.

## Claims

1. A grafting knife having an elongate handle (2) and a generally V-shaped cutting blade (5) attached thereto, said blade having planar wings (9) on each side of the cutting edge (6) characterised in that a head (3) is arranged to pivotally support the blade (5) at a location offset from the longitudinal axis of the handle (2), the cutting edge (6) of the blade faces in the direction of the handle longitudinal axis and the planar wings (9) on each side of the cutting edge (6) define the maximum depth of a groove that may be cut by the blade (5), so that as the head (3) is drawn along by the handle (2) said wings (9) facilitate an evenly cut groove.

2. A grafting knife as claimed in claim 1 characterised in that the blade (5) is shaped so that the converging ends of the limbs (7) of the V-shaped cutting edge (6) are interconnected by an arcuate portion (8).

3. A grafting knife as claimed in claim 2 characterised in that the blade (5) is shaped so that the diverging ends of the limbs (7) of V-shaped cutting edge (6) are each connected to a respective wing (9) by a link member (10) having a lenght partially determining the maximum depth of said groove.

4. A grafting knife as claimed in any preceding claim characterised in that the head (3) has an inverted U-shape so that the head (3) is attached to the handle (2) by the base (33) of the U-shape.

5. A grafting knife as claimed in claim 4 characterised in that the opposed limbs (31, 32) of the U-shape are both cranked along the length thereof away from and substantially parallel with the handle longitudinal axis to form a cranked portion (34) overlying a respective wing (9), the internal spacing between the opposed limbs (31, 32) of the U-shape being arranged to accomodate the link members (10) therebetween.

6. A grafting knife as claimed in claim 5 characterised in that the blade (5) is secured to the head (3) by a pivot attachment (40) between eadh link (10) and the cranked portion (34) of the opposed limbs of the U-shape of the head (3).

7. A grafting knife as claimed in claim 6 characterised in that each wing (9) extends both transversely away from the link member (10) associated therewith and in a direction toward said handle (2).

8. A grafting knife as claimed in claim 3 characterised in that the operative leading edge (11) of each wing (9) is curved toward the handle (2) and away from the arcuate portion (8) of the cutting edge (6) for assisting motion of the wings (9) on a stem to be cut.

9. A grafting knife as claimed in claim 5 characterised in that the cranked portion (34) overlying and adjacent a respective wing (9) is arcuate to facilitate pivotal movement of the blade (5).

10. A grafting knife as claimd in any preceding claim characterised in.that the blade (5) is elastically flexible.

## Patentansprüche

1. Propfmesser mit einem langgestreckten Griff (2) und einer daran angebrachten, allgemein V-förmigen Messerklinge (5), die auf beiden Seiten der Schneide (6) ebenflächige Flügel (9) besitzt, dadurch gekennzeichnet, dazu zur schwenkbaren Lagerung der Klinge (5) an einer gegenüber der Längsachse des Griffes (2) versetzten Stelle ein Kopf (3) vorgesehen ist, daß die Schneide (6) der Klinge der Längsachse des Griffes zugekehrt ist und daß die auf beiden Seiten der Schneide (6) angeordneten, ebenflächigen Flügel (9) die größte Tiefe einer mit der Klinge (5) schneidbaren Nut bestimmen, so daß beim Ziehen des Kopfes (9) mittels des Griffes (2) die Flügel (9) das Schneiden einer gleichmäßigen Nut erleichtern.

2. Pfropfmesser nach Anspruch 1, dadurch gekennzeichnet, daß die Klinge (5) so geformt ist, daß die näher beieinanderliegenden Enden der Schenkel (7) der V-förmigen Schneide (6) durch einen bogenförmigen Teil (8) miteinander verbunden sind.

3. Pfropfmesser nach Anspruch 2, dadurch gekennzeichnet, daß die Klinge (5) so geformt ist, daß die weiter auseinanderliegenden Enden der Schenkel (7) der V-förmigen Schneide (6) mit je einem Flügel (9) durch einen Lenker (10) verbunden sind, dessen Länge zum Teil die größte Tiefe der Nut bestimmt.

4. Pfropfmesser nach einem der vorhergehenden Ansprüche, dadurch gekennzeichnet, daß der Kopf (3) die Form eines umgekehrten U hat und mit der Basis (33) der U-Form an dem Griff (2) angebracht ist.

5. Pfropfmesser nach Anspruch 4, dadurch gekennzeichnet, daß die einander gegenüberliegenden Schenkel (31, 32) der U-Form jeweils in ihrer Längsrichtung von der Längsachse des Griffes weg und parallel zu ihr gekröpft sind, so daß sie je einen abgekröpften Teil (34) bilden, der über dem zugeordneten Flügel (9) liegt, und daß der Abstand zwischen den Innenflächen der einander gegenüberliegenden Schenkel (31, 32) der U-Form so bemessen ist, daß die Lenker (10) dazwischen eintreten können.

6. Pfropfmesser nach Anspruch 5, dadurch gekennzeichnet, daß die Klinge (5) zwischen jedem Lenker (10) und dem abgekröpften Teil (34) der einander gegenüberliegenden Schenkel der U-Form des Kopfes (3) mit dem Kopf (3) durch eine Schwenklagerung (40) verbunden ist.

7. Pfropfmesser nach Anspruch 5, dadurch gekennzeichnet, daß sich jeder Flügel (9) quer von dem ihm zugeordneten Lenker (10) weg und in der Richtung zu dem Griff (2) hin erstreckt.

8. Pfropfmesser nach Anspruch 3, dadurch gekennzeichnet, daß der im Gebrauch vorlaufende Rand (11) jedes Flügels von dem bogenförmigen Teil (8) der Schneide (6) weg und zu dem Griff (2) hin gekrümmt ist, um die Bewegung der Flügel (9) in eine einzuschneidende Unterlage zu unterstützen.

9. Pfropfmesser nach Anspruch 5, dadurch gekennzeichnet, daß der im Bereich eines zugeordneten Flügels (9) angeordnete und über ihm liegende, abgekröpfte Teil (34) bogenförmig ist, um das Verschwenken der Klinge (5) zu erleichtern.

10. Pfropfmesser nach einem der vorhergehenden Ansprüche, dadurch gekennzeichnet, daß die Klinge (5) biegeelastisch ist.

**Revendications**

1. Couteau à greffer comportant une poignée de forme allongée (2) et une lame de coupe (5) de forme générale en V et qui y est fixée, ladite lame présentant des ailes planes (9) de chaque côté du bord de coupe (6), caractérisé en ce qu'une tête (3) est disposée pour supporter la lame (5) en pivotement à un emplacement décalé par rapport à l'axe longitudinal de la poignée (2), en ce que le bord de coupe (6) de la lame est tourné dans la direction de l'axe longitudinal de la poignée et en ce que les ailes planes (9) de chaque côté du bord de coupe (6) définissent la profondeur maximale d'une entaille que la lame (5) peut couper de sorte que, lorsque l'on tire la tête (3) par la poignée (2), lesdites ailes (9) facilitent une entaille de coupe régulière.

2. Couteau à greffer selon la revendication 1, caractérisé en ce que la forme de la lame (5) est telle que les extrémités convergentes des branches (7) du bord de coupe (6) en forme de V sont reliées par une portion en arc (8).

3. Couteau à greffer selon la revendication 2, caractérisé en ce que la forme de la lame (5) est telle que les extrémités divergentes des branches (7) du bord de coupe (6) en forme de V sont reliées chacune à une aile respective (9) par un élément de liaison (10) dont la longueur détermine partiellement la profondeur maximale de ladite entaille.

4. Couteau à greffer selon l'une quelconque des revendications précédentes, caractérisé en ce que la tête (3) présente une forme en U inversé de façon que la tête (3) est fixée à la poignée (2) par la base (33) de la forme en U.

5. Couteau à greffer selon la revendication 4, caractérisé en ce que les branches opposées (31, 32) de la forme en U sont l'une et l'autre coudées sur leur longueur, à distance de l'axe longitudinal de la poignée, et sensiblement parallèlement à cet axe, pour former une portion coudée (34) qui vient reposer sur une aile respective (9), l'espacement intérieur entre les branches opposées (31, 32) de la forme en U étant prévu pour recevoir entre elles les éléments de liaison (10).

6. Couteau à greffer selon la revendication 5, caractérisé en ce que la lame (5) est fixée à la tête (3) par une fixation à pivot (40) disposée entre chaque élément de liaison (10) et la portion coudée (34) des branches opposées de la forme en U de la tête (3).

7. Couteau à greffer selon la revendication 6, caractérisé en ce que chaque aile (9) s'étend à la fois transversalement en s'éloignant de l'élément de liaison (10) qui lui est associé et dans la direction de ladite poignée (2).

8. Couteau à greffer selon la revendication 3, caractérisé en ce que le bord d'attaque opérant (11) de chaque aile (9) est recourbé vers la poignée (2) et en s'éloignant de la portion en arc (8) du bord de coupe (6) pour faciliter le mouvement des ailes (9) sur une tige à entailler.

9. Couteau à greffer selon la revendication 5, caractérisé en ce que la portion coudée (34) située au-dessus et près d'une aile respective (9) est en arc pour faciliter le mouvement de pivotement de la lame (5).

10. Couteau à greffer selon l'une quelconque des revendications précédentes, caractérisé en ce que la lame (5) est élastiquement flexible.

Fig.1

Fig.2

Fig.3

Fig.4